(19) **Europäisches Patentamt**
**European Patent Office**
**Office européen des brevets**

(11) **EP 2 593 908 B1**

(12) **EUROPÄISCHE PATENTSCHRIFT**

(45) Veröffentlichungstag und Bekanntmachung des Hinweises auf die Patenterteilung:
**28.01.2015 Patentblatt 2015/05**

(21) Anmeldenummer: **11738165.7**

(22) Anmeldetag: **11.07.2011**

(51) Int Cl.:
**G06K 19/07** (2006.01)   **G06K 19/077** (2006.01)

(86) Internationale Anmeldenummer:
**PCT/EP2011/003452**

(87) Internationale Veröffentlichungsnummer:
**WO 2012/007144 (19.01.2012 Gazette 2012/03)**

(54) **TRAGBARER DATENTRÄGER, INSBESONDERE CHIPKARTE**

PORTABLE DATA CARRIER, IN PARTICULAR A CHIP CARD

SUPPORT DE DONNÉES PORTATIF, EN PARTICULIER CARTE À PUCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.07.2010  DE 102010027135**

(43) Veröffentlichungstag der Anmeldung:
**22.05.2013  Patentblatt 2013/21**

(73) Patentinhaber: **Giesecke & Devrient GmbH 81677 München (DE)**

(72) Erfinder: **BALDISCHWEILER, Michael 81825 München (DE)**

(56) Entgegenhaltungen:
**WO-A1-2006/117151     US-A1- 2002 097 144 US-A1- 2003 132 301**

EP 2 593 908 B1

**Beschreibung**

Die Erfindung betrifft einen tragbaren Datenträger, insbesondere eine Chipkarte, mit einem Mikroprozessor, der mit einem vorbestimmten Takt eines in dem Datenträger enthaltenen Taktgenerators betreibbar ist, wobei der Taktgenerator einen oder mehrere Kondensatoren umfasst.

Tragbare Datenträger können ein externes Taktsignal empfangen, welches in der Regel direkt als Taktsignal für den Mikroprozessor des Datenträgers verwendet wird. Datenträger können aber auch einen Taktgenerator im Mikroprozessor enthalten und sich somit selbst ein internes Taktsignal erzeugen.

In EP 1877 964 B1 oder WO 2006/117151 A1 ist ein tragbarer Datenträger mit einem Antennenschwingkreis mit Kondensator beschrieben. Durch eine Benutzerinteraktion wird die Resonanzfrequenz des Antennenschwingkreises von einer ersten auf eine zweite Frequenz geändert. Erst nach der Benutzerinteraktion nimmt der Schwingkreis ausreichend Energie auf für einen Datenaustausch mit dem Lesegerät, dessen Feld empfangen wird. Die auf der ersten Frequenz empfangene Energie soll aber bevorzugt bereits vor der Benutzerinteraktion ausreichen, um den Mikroprozessor zu betreiben.

US 2002/0097144 A1 zeigt einen Datenträger mit internem Taktgenerator. Für Datenträger, die eine interne Spannungsversorgung und einen internen Taktgenerator haben, ist es bekannt einen Taster so anzuordnen, dass der Benutzer durch einen Taster die Spannungsversorgung des Mikroprozessors herstellt oder unterbricht.

Unterschiedliche Schalter, die in einem Datenträger zwischen der Antenne und dem Prozessor angeordnet sind, zeigt US 2003/0132301 A1. Aus dem Stand der Technik sind ebenso Lösungen bekannt, mit denen ein Mikroprozessor in einer Chipkarte in einen energiesparenden Sleep-Modus geschaltet wird. Hierzu ist es jedoch erforderlich, dass in dem Prozessor dieser Sleep-Modus integriert ist. Ferner werden zum Verlassen des Sleep-Modus in der Regel mechanische Taster verwendet, welche eher schwierig in eine Chipkarte eingebracht werden können.

Aufgabe der Erfindung ist es deshalb, einen tragbaren Datenträger zu schaffen, mit dem auf einfache Weise der Betrieb des Mikroprozessors des Datenträgers durch einen Benutzer beeinflusst werden kann.

Diese Aufgabe wird durch den tragbaren Datenträger gemäß Patentanspruch 1 gelöst. Weiterbildungen der Erfindung sind in den abhängigen Ansprüchen definiert.

Der erfindungsgemäße tragbare Datenträger verwendet zur Generierung eines vorbestimmten Takts für den Mikroprozessor einen Taktgenerator mit einem oder mehreren Kondensatoren. Dabei ist ein Betätigungselement vorgegeben, welches Bestandteil zumindest eines Kondensators des Taktgenerators ist, wobei der Taktgenerator nach Betätigung des Betätigungselements den vorbestimmten Takt erzeugt. Das heißt, eine notwendige Bedingung für die Erzeugung des vorbestimmten Takts durch den Taktgenerator ist die Betätigung des Betätigungselements. Nur bei dessen Betätigung kann der Taktgenerator den vorbestimmten Takt erzeugen und damit den Mikroprozessor in Betrieb setzen, sofern der Taktgenerator bzw. der Mikroprozessor mit entsprechender Energie, z.B. intern oder aus einem externen Feld, versorgt werden.

Der Zeitpunkt der Inbetriebnahme des Mikroprozessors ist somit unabhängig von einem davor liegenden Zeitpunkt der Bereitstellung der für den Betrieb nötigen Spannungsversorgung.

Zudem ist der generierte Takt vorbestimmt und somit unabhängig von einem externen Taktsignal. Insbesondere ist die Frequenz des generierten Taktes unabhängig von der Frequenz eines externen Taktsignals und/ oder dessen Vorliegen.

Der tragbare Datenträger kann insbesondere eine (kontaktlose und/ oder kontaktbehaftete) Chipkarte jedoch gegebenenfalls auch ein anderer tragbarer Datenträger wie ein RFID-Tag oder ein USB-Token sein. Vorzugsweise weist der Datenträger eine interne Spannungsquelle auf. Ebenso kann eine Anzeigevorrichtung (Display) in dem Datenträger enthalten sein.

Die Erfindung beruht auf der Erkenntnis, dass durch die Beeinflussung eines Kondensators in einem Taktgenerator die Eigenschaften des Taktgenerators derart verändert werden können, dass eine Taktgenerierung nicht mehr möglich ist, was wiederum zur Folge hat, dass der Mikroprozessor nicht betrieben werden kann und somit Strom gespart wird. Durch die Integration des Betätigungselements in zumindest einem Kondensator des Taktgenerators wird ein einfacher Aufbau des Betätigungselements geschaffen. Ferner kann das Betätigungselement für verschiedene Arten von tragbaren Datenträgern verwendet werden, wobei es nicht erforderlich ist, dass die Datenträger eine kontaktlose Schnittstelle umfassen müssen. Vielmehr kann die Energieversorgung des Mikroprozessors auch über eine kontaktbehaftete Schnittstelle oder eine in dem tragbaren Datenträger integrierte Stromquelle erfolgen.

In einer bevorzugten Ausführungsform der Erfindung ist das Betätigungselement derart ausgestaltet, dass es durch Druck auf den tragbaren Datenträger betätigbar ist, wobei dieser Druck z.B. durch die Finger des Benutzers des tragbaren Datenträgers ausgeübt werden kann.

In einer weiteren, besonders bevorzugten Ausführungsform des erfindungsgemäßen Datenträgers wird bei Betätigung des Betätigungselements die Kapazität des zumindest einen Kondensators derart verändert, dass mit dem Taktgenerator der vorbestimmte Takt erzeugbar ist. Man macht sich hierbei die Erkenntnis zunutze, dass allein durch die Veränderung einer Kapazität in dem Taktgenerator die Eigenschaften dieses Generators derart beeinflusst werden können, dass eine Takterzeugung und damit ein Betrieb des Mikroprozessors ermöglicht bzw. verhindert wird.

In einer weiteren Ausführungsform des erfindungsgemäßen Datenträgers ist der zumindest eine Kondensator in einem Körper des tragbaren Datenträgers, insbesondere in dem Kartenkörper einer Chipkarte, derart integriert, dass durch Druck auf den Körper im Bereich des zumindest einen Kondensators wenigstens eine Kondensatorplatte des zumindest einen Kondensators und/ oder dielektrisches Material zwischen den Kondensatorplatten des zumindest einen Kondensators elastisch verformt wird und hierdurch der Abstand zwischen den Kondensatorplatten des zumindest einen Kondensators vermindert wird, was wiederum die Kapazität des Kondensators erhöht. Das dielektrische Material zwischen den Kondensatorplatten ist dabei vorzugsweise Material des Kartenkörpers, wobei sich das Material zwischen den Kondensatorplatten gegebenenfalls auch von dem restlichen Material des Kartenkörpers unterscheiden kann, insbesondere kann es z.B. elastischer als das restliche Material des Kartenkörpers ausgestaltet sein. Je nach Ausgestaltung der oben beschriebenen Ausführungsform kann eine Betätigung des Betätigungselements durch Druck auf eine Seite des Körpers oder erst durch Druck auf beide Seiten des Körpers ausgelöst werden.

In einer besonders bevorzugten Ausführungsform sind Kondensatorplatten des zumindest einen Kondensators auf gegenüberliegenden Seiten des Körpers des tragbaren Datenträgers angeordnet. Der Kondensator kann somit auf einfache Weise durch Integration der Kondensatorplatten in gegenüberliegenden Oberflächen des Datenträgerkörpers realisiert werden.

In einer weiteren, bevorzugten Ausführungsform des erfindungsgemäßen Datenträgers wird bei der Betätigung des Betätigungselements die Kapazität von zwei Kondensatoren verändert, wobei eine Kondensatorplatte des einen Kondensators auf einer Seite des Körpers des tragbaren Datenträgers und eine Kondensatorplatte des anderen Kondensators auf der gegenüberliegenden Seite des Körpers des tragbaren Datenträgers angeordnet ist und zwischen diesen Kondensatorplatten ein gemeinsames Masse-Element, insbesondere in der Form einer gemeinsamen Masseplatte, vorgesehen ist. Mit dieser Variante können die Kondensatoren des Tastgenerators platzsparend in dem tragbaren Datenträger integriert werden.

Der Taktgenerator des erfindungsgemäßen Datenträgers kann an sich bekannte Prinzipien der Takterzeugung verwenden. Insbesondere kann der Taktgenerator ein Quarzoszillator sein, der über die Schwingung eines Quarzes den vorbestimmten Takt zum Betrieb des Mikroprozessors erzeugt. Ebenso kann der Taktgenerator ein sog. RC-Oszillator sein, bei dem eine Phasenverschiebung von 180° mit einer Mehrzahl von RC-Gliedern bewirkt wird. Als Taktgenerator kann in dem erfindungsgemäßen Datenträger sowohl ein externer, außerhalb des Mikroprozessors angeordneter Taktgenerator eingesetzt werden. Ebenso besteht die Möglichkeit, dass ein zumindest teilweise in dem Mikroprozessor integrierter Taktgenerator verwendet wird, von dem insbesondere der zumindest eine Kondensator, der das Betätigungselement enthält, außerhalb des Mikroprozessor angeordnet ist.

In einer weiteren, besonders bevorzugten Ausführungsform des erfindungsgemäßen Datenträgers enthält der tragbare Datenträger neben dem Taktgenerator, mit dem nur bei Betätigung des Betätigungselements der vorbestimmte Takt erzeugbar ist, einen weiteren Taktgenerator, mit dem ohne Betätigung des Betätigungselements der vorbestimmte Takt erzeugbar ist. Im Betrieb (d.h. bei entsprechender Spannungsversorgung) erzeugt dabei der Taktgenerator, mit dem nur bei Betätigung des Betätigungselements der vorbestimmte Takt erzeugbar ist, bei Betätigung des Betätigungselements für eine vorgegebene Zeitspanne den vorbestimmten Takt, wobei nach Ablauf der vorgegebenen Zeitspanne die Generierung des vorbestimmten Takts durch den weiteren Taktgenerator übernommen wird. Gemäß dieser Variante muss das Betätigungselement zum Betrieb des Mikroprozessors nicht permanent betätigt werden, sondern es ist ausreichend, wenn das Betätigungselement eine vorgegebenen Zeitspanne betätigt ist, welche beispielsweise durch eine vorgegebene Anzahl von Takten spezifiziert wird. Ist die Betätigung des Betätigungselements kürzer als die vorgegebene Zeitspanne, so wird die Takterzeugung sofort gestoppt und der Betrieb des Mikroprozessors unterbrochen.

Der erfindungsgemäße Datenträger kann für unterschiedliche Arten von tragbaren Datenträgern eingesetzt werden. In einer bevorzugten Variante ist der tragbare Datenträger dabei ein Datenträger mit einer kontaktlosen Schnittstelle, insbesondere einer NFC-Schnittstelle, zur kontaktlosen Kommunikation und/ oder Datenübertragung. Nichtsdestotrotz ist die Erfindung jedoch auch auf tragbare Datenträger ohne kontaktlose Schnittstelle, z.B. nur mit kontaktbehafteter Schnittstelle, anwendbar. Der mögliche Einsatz der vorliegenden Lösung in unterschiedlichsten Datenträgern ist ein weiterer wichtiger Vorteil.

Ausführungsbeispiele der Erfindung werden nachfolgend anhand der beigefügten Figuren detailliert beschrieben.

Es zeigen:

Fig. 1        eine schematische Darstellung einer Ausführungsform des erfindungsgemäßen tragbaren Datenträgers in der Form einer Chipkarte;

Fig. 2        eine Schnittansicht durch die Chipkarte der Fig.1, welche den Aufbau eines Kondensators des Taktgenerators zeigt, wobei dieser Kondensator ein Betätigungselement enthält;

Fig. 3 und Fig. 4    Ansichten analog zu Fig. 2, welche verschiedene Arten der Betätigung des Betätigungselements des Kondensators wiedergeben; und

Fig. 5    eine Schnittansicht durch eine Chipkarte, welche eine weitere Ausführungsform eines Betätigungselements wiedergibt.

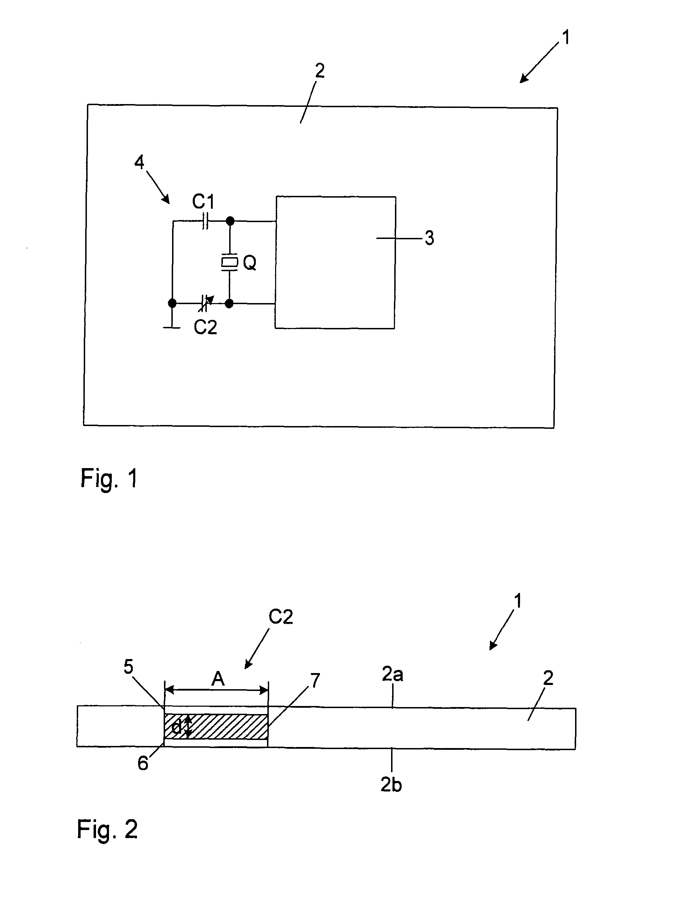

Die nachfolgend erläuterte Ausführungsform eines erfindungsgemäßen tragbaren Datenträgers wird anhand einer Chipkarte 1 beschrieben, deren Aufbau in Fig. 1 schematisch wiedergegeben ist. Die Chipkarte 1 umfasst einen Kartenkörper 2, der beispielsweise im Scheckkartenformat ausgebildet ist. In dem Kartenkörper 2 ist ein Mikroprozessor 3 zur Ausführung von Kommandos bei dessen Betrieb vorgesehen. Zum Betrieb des Mikroprozessors kann dieser auf verschiedene Arten mit elektrischer Spannung versorgt werden, beispielsweise über eine kontaktbehaftete Schnittstelle auf der Karte. In einer bevorzugten Ausführungsform ist die Karte jedoch als kontaktlose Karte mit einer NFC-Schnittstelle (NFC = Near Field Communication) ausgestaltet, über welche mit einem entsprechenden (nicht gezeigten) Schwingkreis Energie aus einem externen elektromagnetischen Feld eines Lesegeräts zur Stromversorgung des Mikroprozessors entnommen werden kann. Über die NFC-Schnittstelle kann ferner auch eine kontaktlose Datenübertragung zwischen Chipkarte und dem Lesegerät stattfinden.

Um den Stromverbrauch eines aktuell nicht zur Ausführung von Kommandos genutzten Mikroprozessors 3 zu reduzieren bzw. die Abarbeitung von Kommandos des Mikroprozessors auf sichere Weise durch einen Benutzer zu starten und gegebenenfalls zu stoppen, ist in der Ausführungsform der Fig.1 ein spezieller externer Taktgenerator 4 vorgesehen, der über entsprechende Leitungen an den Mikroprozessor 3 angeschlossen ist. Dieser Taktgenerator 4, der in Fig.1 durch ein Ersatzschaltbild wiedergegeben ist, erzeugt einen vorbestimmten Takt, den der Mikroprozessor in seinem Betrieb zur Abarbeitung von Kommandos benötigt. Ohne die Generierung des vorbestimmten Takts ist der Mikroprozessor im inaktiven Zustand, d.h. durch ihn werden keine Kommandos abgearbeitet und es wird Energie gespart. Der Taktgenerator 4 der Fig. 1 zeichnet sich dabei dadurch aus, dass er ein Betätigungselement enthält, wobei nur dann, wenn ein Benutzer dieses Betätigungselement betätigt, der vorbestimmte Takt generiert wird. Auf diese Weise kann der Benutzer selbsttätig steuern, wann der Mikroprozessor durch Betätigung des Betätigungselements gestartet werden soll und wann der Mikroprozessor durch Beendigung der Betätigung des Betätigungselements gestoppt werden soll. Somit kann selbst bei einem Energieübertrag aus einem externen Feld über die kontaktlose Schnittstelle der Chipkarte sichergestellt werden, dass der Mikroprozessor nicht arbeitet.

Der in Fig. 1 gezeigte Taktgenerator 4 ist ein Quarzoszillator mit einem Quarz Q, der elektrisch mit zwei Kondensatoren C1 und C2 verbunden ist. Wird der Taktgenerator mit Gleichspannung versorgt, so wird der Quarz Q in Schwingung versetzt, so dass ein vorbestimmter Takt generiert wird, der wiederum dem Mikroprozessor zugeführt wird. Zur Taktgenerierung ist es dabei wesentlich, dass die Kapazitäten der beiden Kondensatoren C1 und C2 auf vorgegebene Werte eingestellt sind, wobei der Taktgenerator bei Abweichung von diesen Werten den vorbestimmten Takt nicht mehr generieren kann. Der Taktgenerator 4 gemäß Fig. 1 ist dabei so ausgelegt, dass der Quarz Q nur schwingt, wenn die Kapazität des Kondensators C1 genauso groß ist wie die Kapazität des Kondensators C2. Eine entsprechende Ausgestaltung eines Taktgenerators mit diesen Eigenschaften ist dem Fachmann geläufig und liegt ihm Rahmen von fachmännischem Handeln.

In der Ausführungsform der Fig.1 ist das weiter unten noch näher beschriebene Betätigungselement Bestandteil des Kondensators C2 und ermöglicht, die Kapazität des Kondensators C2 zu variieren, was durch einen entsprechenden Pfeil am Kondensator C2 angedeutet ist. Dabei wird nur bei Betätigung des Betätigungselements die Kapazität des Kondensators C2 so eingestellt, dass sie der Kapazität des Kondensators C1 entspricht, was zur Folge hat, dass die vorbestimmte Taktfrequenz durch den Taktgenerator erzeugt werden kann. Ohne Betätigung des Betätigungselements weicht die Kapazität des Kondensators C2 von der Kapazität des Kondensators C1 ab, so dass in diesem Fall keine Takterzeugung durch den Taktgenerator möglich ist und somit der Mikroprozessor nicht in Betrieb gesetzt werden kann.

Üblicherweise verfügt auch der Mikroprozessor 3 über einen internen (nicht gezeigten) Taktgenerator, der vorzugsweise als interner RC-Oszillator ausgestaltet ist. Grundsätzlich besteht dabei die Möglichkeit, sowohl den internen Taktgenerator als auch den externen Taktgenerator 4 zur Taktversorgung des Mikroprozessors zu verwenden. Beispielsweise kann die Auswahl des Taktgenerators über Konfigurationsbits in SFRs (Special Function Register) im Mikroprozessor erfolgen. In der hier beschriebenen Ausführungsform wird der externe Taktgenerator 4 als Taktquelle für den Mikroprozessor verwendet. Das heißt, wenn der Taktgenerator 4 keinen Takt erzeugt, bleibt der Mikroprozessor stehen. Da der Mikroprozessor basierend auf der CMOS-Architektur aufgebaut ist, benötigt er auch keinen Strom, wenn kein Takt anliegt.

Fig. 2 zeigt einen Schnitt durch die Chipkarte 1 der Fig. 1 im Bereich des Kondensators C2, der das entsprechende Betätigungselement enthält. Der Kondensator C2 ist dabei in dem Kartenkörper 2 der Chipkarte 1 integriert und umfasst eine erste Kondensatorplatte 5 sowie eine zweite Kondensatorplatte 6. Beide Kondensatorplatten sind auf der Oberfläche des Kartenkörpers 2 angeordnet, wobei sich die Kondensatorplatte 5 auf der Oberseite 2a und die Kondensatorplatte 6 auf der Unterseite 2b des Kartenkörpers befindet. Der Kartenkörper ist ganz bzw. teilweise aus dielektrischem Material ausgebildet, wobei sich zwischen den Kondensatorplatten 5 und 6 weiches dielektrisches Material 7 befindet. Die Kondensatorplatten sind rechteckförmig ausgestaltet und umfassen jeweils eine Fläche mit der Größe A. Der Abstand zwischen den Kondensatorplatten 5 und 6 beträgt d. Mit diesen Größen lässt sich die Kapazität C des Kondensators wie folgt berechnen:

$$C = \frac{\varepsilon_r \varepsilon_0 A}{d}.$$

Dabei bezeichnet $\varepsilon_0$ die elektrische Feldkonstante und $\varepsilon_r$ die Dielektrizitätskonstante des Dielektriums 7.

Wie man aus obiger Formel erkennt, nimmt die Kapazität C des Kondensators zu, wenn der Abstand d verringert wird. Diese Eigenschaft macht man sich in der nachfolgend beschriebenen Variante eines Betätigungselements zunutze, welches als Taster ausgebildet, der durch einen Benutzer über dessen Finger durch Druck betätigt werden kann. Dabei wird durch Druckausübung von oben bzw. von unten auf die Kondensatorplatten 5 bzw. 6 das weiche Dielektrikum 7 sowie zumindest eine Kondensatorplatte verformt, wodurch der Abstand d verkleinert und dadurch die Kapazität des Kondensators C2 erhöht wird. Der Taster ist dann betätigt, wenn eine weitere Verformung des Dielektrikums bzw. der zumindest einen Kondensatorplatte durch Druck nicht mehr möglich ist. Der Kondensator C2 ist dabei derart ausgelegt, dass in diesem betätigten Zustand seine Kapazität der Kapazität des Kondensators C1 entspricht, so dass durch den Taktgenerator bei Stromversorgung der entsprechende vorbestimmte Takt generiert wird, den der Mikroprozessor für seinen Betrieb benötigt. Das heißt, nur bei Betätigung des Tasters kann der Mikroprozessor 3 in Betrieb genommen werden und bei Beendigung der Betätigung des Tasters wird durch die Veränderung der Kapazität des Kondensators C2 die Taktgenerierung gestoppt und hierdurch der Mikroprozessor in einen inaktiven Zustand geschaltet.

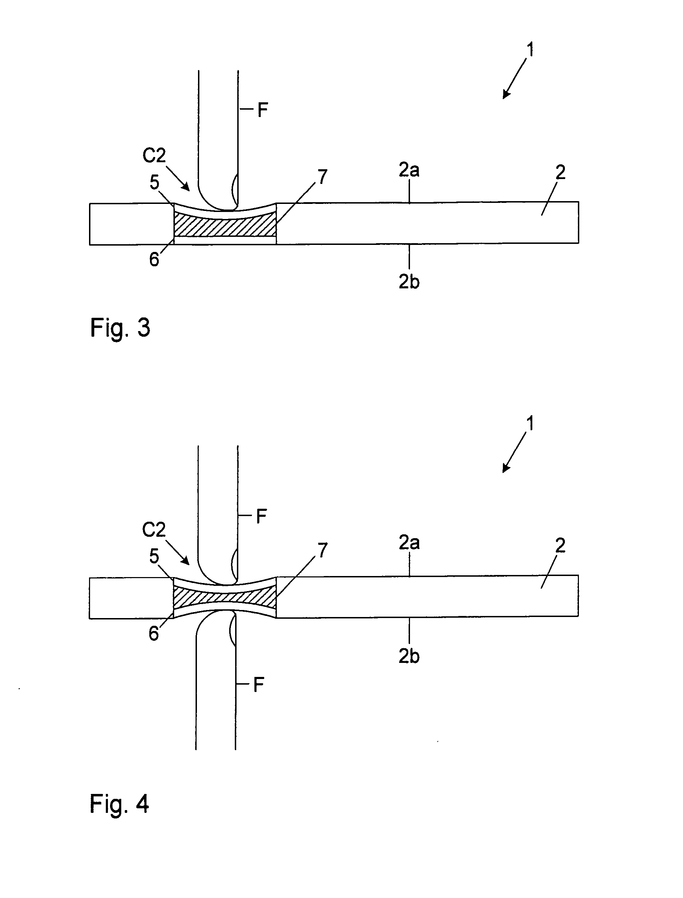

Fig. 3 und Fig. 4 zeigen Ansichten analog zu Fig. 2, wobei verschiedene Varianten der Betätigung des Tasters verdeutlicht sind. In der Ausführungsform der Fig. 3 erfolgt die Betätigung des Tasters dadurch, dass ein Benutzer mit seinem Finger F lediglich von der Oberseite 2a auf die Kondensatorplatte 5 nach unten drückt, so dass sich diese Platte sowie das Dielektrikum 7 verformt, wohingegen die Kondensatorplatte 6 auf der Unterseite 2b unverformt bleibt. Der Kondensator C2 kann im Ruhezustand, d.h. ohne Betätigung durch den Finger F, z.B. eine Kapazität von 2 pF aufweisen. Bei Betätigung des Tasters durch die in Fig. 3 gezeigte Druckausübung kann sich die Kapazität des Kondensators dann beispielsweise auf einen Wert von in etwa zwischen 8 und 10 pF erhöhen.

Um gegebenenfalls bei Betätigung des Tasters eine noch größere Erhöhung der Kondensatorkapazität zu erreichen, kann der Kondensatoraufbau in seiner Dimensierung so im Kartenkörper erfolgen, dass von beiden Seiten auf den Kondensator C2 gedrückt werden muss, um hierdurch zu erreichen, dass sich die Kapazität des Kondensators derart verändert, dass durch den Taktgenerator der vorbestimmte Takt erzeugbar ist. Diese Variante ist in Fig. 4 wiedergegeben. Man erkennt, dass zur Betätigung des Tasters ein Benutzer mit zwei Fingern F eine Kraft sowohl auf die Oberseite 2a als auch auf die Unterseite 2b des Kartenkörpers ausüben muss. Diese Kraftausübung bewirkt eine Verformung beider Kondensatorplatten 5 und 6 sowie des Dielektrikums 7 zwischen den Kondensatorplatten. In der Ausführungsform der Fig. 4 reicht dabei eine Kraftausübung nur auf einer Seite des Kondensator-tasters nicht aus, da die hierdurch hervorgerufene Kapazitätsänderung nicht groß genug ist, um zu erreichen, dass der Taktgenerator 4 den vorbestimmten Takt erzeugt.

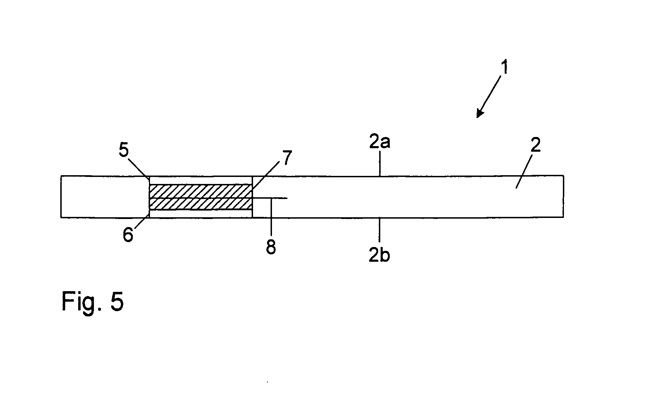

Fig. 5 zeigt eine weitere Ausführungsform eines Kondensator-Tasters, der als Doppelkondensator mit gemeinsamer Masse aufgebaut ist. Der Doppelkondensator beinhaltet sowohl den Kondensator C1 als auch den Kondensator C2 gemäß Fig. 1. Der Kondensator C1 wird dabei durch die Kondensatorplatte 5 auf der Oberseite 2a des Kartenkörpers 2 und eine innerhalb des Kartenkörpers liegende Masse 8 in der Form einer Massenplatte gebildet. Demgegenüber wird der Kondensator C2 durch die auf der Unterseite 2b des Kartenkörpers 2 liegende Kondensatorplatte 6 sowie die Massenplatte 8 gebildet. Die Masse 8 stellt somit sowohl einen Bestandteil des Kondensators C1 als auch einen Bestandteil des Kondensators C2 dar. Bei dem Aufbau der Fig. 5 muss sowohl von oben auf die Kondensatorplatte 5 als auch von unten auf die Kondensatorplatte 6 gedrückt werden, um hierdurch die beiden Kapazitäten der Kondensatoren derart einzustellen, dass der Taktgenerator den vorbestimmten Takt generieren kann. Die Ausführungsform der Fig. 5 hat den Vorteil, dass in platzsparender Weise beide Kondensatoren C1 und C2 im Kartenkörper integriert werden können.

Wie gerade beschrieben, kann nur bei Betätigung des entsprechend ausgeführten Kondensator-Tasters die Generierung eines vorbestimmten Takts durch den Taktgenerator 4 erreicht werden und hierdurch die Programmabarbeitung durch den Mikroprozessor 3 beginnen. In einer Variante der Erfindung wird zusätzlich ein bereits oben erwähnter interner Taktgenerator des Mikroprozessors 3 genutzt. Dabei ist der Mikroprozessor derart ausgelegt, dass nach der Betätigung des Tasters zunächst eine vorbestimmte Anzahl von Takten, z.B. 1000 Takte, durch den externen Taktgenerator 4 generiert wird. Nach Überschreiten dieser Anzahl von Takten wird dann von dem externen Taktgenerator auf den internen Taktgenerator umgeschaltet, der anschließend die Taktgenerierung übernimmt. Auf diese Weise wird erreicht, dass das Betätigungselement nicht während der gesamten Abarbeitung eines Programms im Mikroprozessor durch den Benutzer betätigt werden muss. Vielmehr ist es ausreichend, wenn der Kondensator-Taster für eine vorbestimmte Zeit, welche durch die vorbestimmte Anzahl von Takten gegeben ist, betätigt wird. Anschließend setzt sich dann die Programmabarbeitung selbstständig fort, da dann die Taktgenerierung durch den internen Taktgenerator erfolgt, dessen Funktion nicht an den Kondensator-Taster gekoppelt ist. Wird der Kondensator-Taster jedoch zu früh, d.h. vor dem Ablauf der vorbestimmten Anzahl von Takten, losgelassen, wird die Programmabarbeitung gestoppt und der Programm-Counter im Mikroprozessor wieder auf Reset gesetzt.

In einer weiteren Variante des erfindungsgemäßen Datenträgers kann die Funktion des externen Taktgenerators 4 auch durch einen Taktgenerator übernommen werden, der zum Teil in dem Mikroprozessor 3 integriert ist. Insbesondere kann als Taktgenerator ein RC-Oszillator eingesetzt werden, der bis auf einen Kondensator in dem Mikroprozessor enthalten ist. Dieser Kondensator wird aus dem Mikroprozessor nach außen geführt und kann analog zu dem Kondensator C2 gemäß den oben beschriebenen Ausführungsformen ausgestaltet sein. In dieser Ausführungsform ist der RC-Oszillator derart ausgelegt, dass die Takterzeugung nur dann beginnt, wenn der nach außen geführte Kondensator eine vorbestimmte Kapazität aufweist, wobei diese Kapazität durch Betätigung des Tasters eingestellt wird. Man macht sich hierbei die Erkenntnis zunutze, dass ein RC-Oszillator nur dann arbeitet, wenn seine Kapazitäten derart eingestellt werden, dass durch die RC-Glieder des Oszillators eine Phasenverschiebung von 180° erreicht wird. Der soeben beschriebene Aufbau kann insbesondere für Kontaktloskarten mit entsprechender kontaktloser NFC-Schnittstelle eingesetzt werden, da diese Karten in der Regel über einen eigenen freilaufenden RC-Oszillator verfügen. Solange der freilaufende RC-Oszillator nicht arbeitet, wird der Programmablauf in der Karte nicht gestartet, selbst wenn ausreichend Energie für den Mikroprozessor über ein externes, durch die NFC-Schnittstelle empfangenes Feld bereitgestellt wird.

Die im Vorangegangenen beschriebenen Ausführungsformen der Erfindung weisen eine Reihe von Vorteilen auf. Insbesondere wird der Betrieb eines Mikroprozessors einer Chipkarte auf einfache Weise an die Betätigung eines Betätigungselements gekoppelt. Dieses Betätigungselement ist als Bestandteil eines Kondensators des Taktgenerators ausgeführt, ohne dass zusätzliche mechanische Taster benötigt werden. Es ist dabei nicht mehr erforderlich, dass ein Mikroprozessor zur Einsparung von Energie in einen Sleep-Modus gesetzt wird, denn ein inaktiver Zustand des Prozessors wird im Rahmen der Erfindung einfach dadurch erreicht, dass das Betätigungselement nicht betätigt wird, da dann kein, für den Betrieb des Mikroprozessors erforderlicher Takt generiert wird. Die Erfindung eignet sich insbesondere zur Verwendung in Kontaktloskarten mit einer entsprechenden Kontaktlosschnittstelle, welche die Energie zum Betrieb des Mikroprozessors aus einem empfangenen Nahfeld entnehmen. Dabei kann durch das erfindungsgemäße Betätigungselement sichergestellt werden, dass im Falle, dass ein externes Feld anliegt, die Abarbeitung von Kommandos im Mikroprozessor erst dann gestartet wird, wenn das Betätigungselement betätigt wird.

## Patentansprüche

1. Tragbarer Datenträger, insbesondere Chipkarte, umfassend einen Mikroprozessor (3), der mit einem vorbestimmten Takt eines in dem tragbaren Datenträger (1) enthaltenen Taktgenerators (4) betreibbar wird, wobei der Taktgenerator (4) einen oder mehrere Kondensatoren (C1, C2) umfasst,

   **dadurch gekennzeichnet, dass**
   der tragbare Datenträger (1) ein Betätigungselement (5, 6) umfasst, welches Bestandteil zumindest eines Kondensators (C2) des Taktgenerators (4) ist, wobei mit dem Taktgenerator (4) bei Betätigung des Betätigungselements (5, 6) der vorbestimmte Takt erzeugbar ist.

2. Datenträger nach Anspruch 1, **dadurch gekennzeichnet, dass** das Betätigungselement (5, 6) derart ausgestaltet ist, dass es durch Druck und/oder Berührung auf den tragbaren Datenträger (1) betätigbar ist.

3. Datenträger nach Anspruch 1 oder 2, **dadurch gekennzeichnet, dass** bei Betätigung des Betätigungselements (4,5) die Kapazität des zumindest einen Kondensators (C2) derart verändert wird, dass mit dem Taktgenerator (4) der vorbestimmte Takt erzeugbar ist.

4. Datenträger nach einem der vorhergehenden Ansprüche, **dadurch gekennzeichnet, dass** der zumindest eine Kondensator (C2) in einem Körper (2) des tragbaren Datenträgers (1), insbesondere in dem Kartenkörper einer Chipkarte, derart integriert ist, dass durch Druck auf den Körper (2) im Bereich des zumindest einen Kondensators (C2) wenigstens eine Kondensatorplatte (5, 6) des zumindest einen Kondensators (C2) und/ oder dielektrisches Material (7) zwischen den Kondensatorplatten (5, 6) des zumindest einen Kondensators (C2) elastisch verformt wird und hierdurch der Abstand zwischen den Kondensatorplatten (5, 6) des zumindest einen Kondensators (C2) vermindert wird.

5. Datenträger nach Anspruch 4, **dadurch gekennzeichnet, dass** eine Betätigung des Betätigungselements (5, 6) durch Druck auf eine Seite (2a) des Körpers (2) oder erst durch Druck auf beide Seite (2a, 2b) des Körpers (2) ausgelöst wird.

6. Datenträger nach Anspruch 4 oder 5, **dadurch gekennzeichnet, dass** Kondensatorplatten (5, 6) des zumindest einen Kondensators (C2) auf gegenüberliegenden Seiten (2a, 2b) des Körpers (2) des tragbaren Datenträgers (1) angeordnet sind.

7. Datenträger nach Anspruch 6, **dadurch gekennzeichnet, dass** bei der Betätigung des Betätigungselements (5, 6) die Kapazität von zwei Kondensatoren (C1, C2) verändert wird, wobei eine Kondensatorplatte (5) des einen Kondensators (C1) auf einer Seite (2a) des Körpers (2) des tragbaren Datenträgers (1) und eine Kondensatorplatte (6) des anderen Kondensators C2) auf der gegenüberliegenden Seite (2b) des Körpers (2) des tragbaren Datenträgers (1) angeordnet ist und zwischen diesen Kondensatorplatten (5, 6) ein gemeinsames Masse-Element (8) vorgesehen ist.

8. Datenträger nach einem der vorhergehenden Ansprüche, **dadurch gekennzeichnet, dass** der Taktgenerator (4) ein Quarzoszillator oder ein RC-Oszillator ist.

9. Datenträger nach einem der vorhergehenden Anspruch, **dadurch gekennzeichnet, dass** der Taktgenerator (4) ein externer, außerhalb des Mikroprozessors (3) angeordneter Taktgenerator oder ein zumindest teilweise in dem Mikroprozessor (3) integrierter Taktgenerator ist, von dem insbesondere der zumindest eine Kondensator (C2) außerhalb des Mikroprozessors (3) angeordnet ist.

10. Datenträger nach einem der vorhergehenden Ansprüche, **dadurch gekennzeichnet, dass** der tragbare Datenträger (1) neben dem Taktgenerator (4), mit dem nur bei Betätigung des Betätigungselements (5, 6) der vorbestimmte Takt erzeugbar ist, einen weiteren Taktgenerator umfasst, mit dem ohne Betätigung des Betätigungselements (5, 6) der vorbestimmte Takt erzeugbar ist, wobei der Taktgenerator (4), mit dem nur bei Betätigung des Betätigungselements (5, 6) der vorbestimmte Takt erzeugbar ist, bei Betätigung des Betätigungselements (5, 6) für eine vorgegebene Zeitspanne den vorbestimmten Takt generiert, wobei nach Ablauf der vorgegebenen Zeitspanne die Generierung des vorbestimmten Takts durch den weiteren Taktgenerator übernommen wird.

11. Datenträger nach einem der vorhergehenden Anspruche, **dadurch gekennzeichnet, dass** der Datenträger ein Datenträger (1) mit einer kontaktlosen Schnittstelle zur kontaktlosen Kommunikation und/ oder Datenübertragung ist.

12. Datenträger nach einem der vorhergehenden Ansprüche, **dadurch gekennzeichnet, dass** der Zeitpunkt der Inbetriebnahme des Mikroprozessors (3) somit unabhängig von einem Zeitpunkt der Bereitstellung der für den Betrieb des Mikroprozessors (3) nötigen Spannungsversorgung am Mikroprozessor (3) ist.

13. Datenträger nach einem der vorhergehenden Ansprüche, **dadurch gekennzeichnet, dass** der interne Taktgenerator (4) derart ausgebildet ist, dass die Frequenz des generierten Taktes unabhängig von einer Frequenz eines externen Taktsignals ist.

14. Datenträger nach einem der vorhergehenden Ansprüche, **dadurch gekennzeichnet, dass** der interne Taktgenerator (4) derart ausgebildet ist, die Frequenz des generierten Taktes unabhängig von dem Vorliegen eines externen Taktsignals ist.

## Claims

1. A portable data carrier, in particular chip card, comprising a microprocessor (3) which becomes operable with a predetermined clock of a clock generator (4) contained in the portable data carrier (1), wherein the clock generator (4) comprises one or more capacitors (C1, C2),
**characterized in that**
the portable data carrier (1) comprises an actuating element (5, 6) which is part of at least one capacitor (C2) of the clock generator (4), wherein the predetermined clock is producible with the clock generator (4) upon actuation of the actuating element (5, 6).

2. The data carrier according to claim 1, **characterized in that** the actuating element (5, 6) is configured such that it is actuatable by pressure and/or touch on the portable data carrier (1).

**3.** The data carrier according to claim 1 or 2, **characterized in that** upon actuation of the actuating element (4, 5) the capacitance of the at least one capacitor (C2) is changed such that the predetermined clock is producible with the clock generator (4).

**4.** The data carrier according to any of the previous claims, **characterized in that** the at least one capacitor (C2) is integrated in a body (2) of the portable data carrier (1), in particular in the card body of a chip card, such that at least one capacitor plate (5, 6) of the at least one capacitor (C2) and/or dielectric material (7) between the capacitor plates (5, 6) of the at least one capacitor (C2) is deformed elastically by pressure on the body (2) in the region of the at least one capacitor (C2), and the distance between the capacitor plates (5, 6) of the at least one capacitor (C2) is thereby decreased.

**5.** The data carrier according to claim 4, **characterized in that** an actuation of the actuating element (5, 6) is triggered by pressure on one side (2a) of the body (2) or only by pressure on both sides (2a, 2b) of the body (2).

**6.** The data carrier according to claim 4 or 5, **characterized in that** capacitor plates (5, 6) of the at least one capacitor (C2) are disposed on opposing sides (2a, 2b) of the body (2) of the portable data carrier (1).

**7.** The data carrier according to claim 6, **characterized in that** upon the actuation of the actuating element (5, 6) the capacitance of two capacitors (C1, C2) is changed, wherein a capacitor plate (5) of the one capacitor (C1) is disposed on one side (2a) of the body (2) of the portable data carrier (1) and a capacitor plate (6) of the other capacitor C2) on the opposing side (2b) of the body (2) of the portable data carrier (1), and a common grounding element (8) is provided between said capacitor plates (5, 6).

**8.** The data carrier according to any of the previous claims, **characterized in that** the clock generator (4) is a quartz oscillator or an RC oscillator.

**9.** The data carrier according to any of the previous claims, **characterized in that** the clock generator (4) is an external clock generator disposed outside the microprocessor (3), or a clock generator integrated at least partly in the microprocessor (3), of which in particular the at least one capacitor (C2) is disposed outside the microprocessor (3).

**10.** The data carrier according to any of the previous claims, **characterized in that** the portable data carrier (1) comprises, besides the clock generator (4) with which the predetermined clock is producible only upon actuation of the actuating element (5, 6), a further clock generator with which the predetermined clock is producible without actuation of the actuating element (5, 6), wherein the clock generator (4) with which the predetermined clock is producible only upon actuation of the actuating element (5, 6) generates the predetermined clock for a preset time span upon actuation of the actuating element (5, 6), wherein at the end of the preset time span the generation of the predetermined clock is taken over by the further clock generator.

**11.** The data carrier according to any of the previous claims, **characterized in that** the data carrier is a data carrier (1) having a contactless interface for contactless communication and/or data transfer.

**12.** The data carrier according to any of the previous claims, **characterized in that** the time when the microprocessor (3) is put into operation is thus independent of a time when the power supply necessary for operation of the microprocessor (3) is made available on the microprocessor (3).

**13.** The data carrier according to any of the previous claims, **characterized in that** the internal clock generator (4) is configured such that the frequency of the generated clock is independent of a frequency of an external clock signal.

**14.** The data carrier according to any of the previous claims, **characterized in that** the internal clock generator (4) is configured such that the frequency of the generated clock is independent of the presence of an external clock signal.

**Revendications**

**1.** Support de données portable, notamment carte à puce, comprenant un microprocesseur (3) qui devient exploitable avec une horloge prédéterminée d'un générateur d'horloge (4) contenu dans le support de données portable (1), le générateur d'horloge (4) comprenant un ou plusieurs condensateurs (C1, C2),

**caractérisé en ce que**

le support de données portable (1) comprend un élément d'actionnement (5, 6) qui est une partie constituante d'au moins un condensateur (C2) du générateur d'horloge (4), cependant que, avec le générateur d'horloge (4), en cas d'actionnement de l'élément d'actionnement (5, 6), l'horloge prédéterminée peut être engendrée.

2. Support de données selon la revendication 1, **caractérisé en ce que** l'élément d'actionnement (5, 6) est réalisé de telle façon qu'il est actionnable par pression et/ou effleurement sur le support de données portable (1).

3. Support de données selon la revendication 1 ou 2, **caractérisé en ce que**, en cas d'actionnement de l'élément d'actionnement (4, 5), la capacité du au moins un condensateur (C2) est modifiée de telle façon que, avec le générateur d'horloge (4), l'horloge prédéterminée peut être engendrée.

4. Support de données selon une des revendications précédentes, **caractérisé en ce que** le au moins un condensateur (C2) est intégré de telle façon dans un corps (2) du support de données portable (1), notamment dans le corps de carte d'une carte à puce, que, par pression sur le corps (2) dans la zone du au moins un condensateur (C2), au moins une plaque de condensateur (5, 6) du au moins un condensateur (C2) et/ou matériau diélectrique (7) entre les plaques de condensateur (5, 6) du au moins un condensateur (C2) est déformé élastiquement et que, par cet effet, l'écart entre les plaques de condensateur (5, 6) du au moins un condensateur (C2) est diminué.

5. Support de données selon la revendication 4, **caractérisé en ce qu'**un actionnement de l'élément d'actionnement (5, 6) est engendré par pression sur un côté (2a) du corps (2) ou seulement par pression sur les deux côtés (2a, 2b) du corps (2).

6. Support de données selon la revendication 4 ou 5, **caractérisé en ce que** des plaques de condensateur (5, 6) du au moins un condensateur (C2) sont agencées sur des côtés opposés (2a, 2b) du corps (2) du support de données portable (1).

7. Support de données selon la revendication 6, **caractérisé en ce que**, lors de l'actionnement de l'élément d'actionnement (5, 6), la capacité de deux condensateurs (C1, C2) est modifiée, une plaque de condensateur (5) du un condensateur (C1) étant agencée d'un côté (2a) du corps (2) du support de données portable (1) et une plaque de condensateur (6) de l'autre condensateur (C2) étant agencée du côté opposé (2b) du corps (2) du support de données portable (1) et un élément de masse (8) commun étant prévu entre ces plaques de condensateur (5, 6).

8. Support de données selon une des revendications précédentes, **caractérisé en ce que** le générateur d'horloge (4) est un oscillateur à quartz ou un oscillateur RC.

9. Support de données selon une des revendications précédentes, **caractérisé en ce que** le générateur d'horloge (4) est un générateur d'horloge externe agencé à l'extérieur du microprocesseur (3) ou un générateur d'horloge qui est au moins partiellement intégré dans le microprocesseur (3) et dont notamment le au moins un condensateur (C2) est agencé à l'extérieur du microprocesseur (3).

10. Support de données selon une des revendications précédentes, **caractérisé en ce que** le support de données portable (1), en plus du générateur d'horloge (4) avec lequel, uniquement en cas d'actionnement de l'élément d'actionnement (5, 6), l'horloge prédéterminée peut être engendrée, comprend un autre générateur d'horloge avec lequel, sans actionnement de l'élément d'actionnement (5, 6), l'horloge prédéterminée peut être engendrée, cependant que le générateur d'horloge (4) avec lequel, uniquement en cas d'actionnement de l'élément d'actionnement (5, 6), l'horloge prédéterminée peut être engendrée, génère en cas d'actionnement de l'élément d'actionnement (5, 6), pour un laps de temps donné, l'horloge prédéterminée, cependant que, après écoulement du laps de temps donné, la génération de l'horloge prédéterminée est assumée par l'autre générateur d'horloge.

11. Support de données selon une des revendications précédentes, **caractérisé en ce que** le support de données est un support de données (1) ayant une interface sans contact pour la communication et/ou transmission de données sans contact.

12. Support de données selon une des revendications précédentes, **caractérisé en ce que** le moment de la mise en marche du microprocesseur (3) ne dépend ainsi pas d'un moment de la mise à disposition de l'alimentation électrique du microprocesseur (3) nécessaire à la marche du microprocesseur (3).

**13.** Support de données selon une des revendications précédentes, **caractérisé en ce que** le générateur d'horloge (4) interne est réalisé de telle façon que la fréquence de l'horloge générée ne dépend pas d'une fréquence d'un signal d'horloge externe.

**14.** Support de données selon une des revendications précédentes, **caractérisé en ce que** le générateur d'horloge (4) interne est réalisé de telle façon que la fréquence de l'horloge générée ne dépend pas de l'existence d'un signal d'horloge externe.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1877964 B1
- WO 2006117151 A1
- US 20020097144 A1
- US 20030132301 A1